# EUROPEAN PATENT SPECIFICATION

(11) **EP 3 203 831 B1**
(45) Date of publication and mention of the grant of the patent: **12.09.2018**
(21) Application number: 15791752.7
(22) Date of filing: 08.10.2015
(51) Int. Cl.: A01K 1/03

(54) **APPARATUS AND METHOD FOR PROCESSING CONTAINING DEVICES FOR ANIMALS**
VORRICHTUNG UND VERFAHREN ZUR VERARBEITUNG VON VORRICHTUNGEN ZUM ZURÜCKHALTEN VON TIEREN
APPAREIL ET PROCÉDÉ DE TRAITEMENT DE DISPOSITIFS DE CONTENTION POUR ANIMAUX

(30) Priority: 08.10.2014 IT UD20140162
(43) Date of publication of application: 16.08.2017
(73) Proprietor: Steelco S.p.A., 31039 Riese Pio X (IT)
(72) Inventor: ZARDINI, Fabio, 31033 Castelfranco Veneto (IT); CAPOVILLA, Ivone, 31037 Loria (IT); CASONATO, Ottorino, 31033 CastelfrancoVeneto (IT)
(74) Representative: Petraz, Davide Luigi
(86) International application number: PCT/IB2015/057706
(87) International publication number: WO 2016/055968

(56) References cited:
- WO-A1-2008/142788
- US-A1- 2011 054 669
- US-B1- 6 553 939

## Description

### FIELD OF THE INVENTION

Forms of embodiment described here concern an apparatus and the corresponding method for processing containing devices for animals, or guinea pigs, reared in animal breeding facilities.

### BACKGROUND OF THE INVENTION

In the field of scientific research it is known to house laboratory animals subjected to experimental tests, such as guinea pigs or other small rodents like mice, rats, rabbits, in containing devices, also called cages.

Known containing devices typically comprise a box-like body, or tray, in which the animals are disposed, a trough, generally of a reticular structure, in which the food for the animals is disposed, and a lid to close the tray at the top.

On the bottom of the tray an absorbent material is distributed, usually sawdust, or sand, that defines a litter to absorb and collect the animals' excrement.

It is also known to process said containing devices to carry out at least operations to disassemble the lid and the trough from the tray, to remove the litter from the tray, to remove food residues from the trough, to wash and possibly sterilize the tray, the trough and the lid, and to subsequent assemble them.

Some known solutions provide that the operations to disassemble the lid and the trough from the tray, to remove the litter from the tray, and to remove residues from the trough, are carried out manually by operators.

These operations, as well as being repetitive and monotonous over time for the operators, expose them to a particularly dusty and potentially contaminated environment, and require the use of suitable protection.

The operators are then required to position the tray, the trough and the lid in a washer machine for subsequent washing.

Once the washing operations have finished, the tray, the trough and the lid are removed from the washer machine and manually reassembled by the operators.

These operations, even though carried out with maximum care by the operators, can result in an incorrect positioning of the components of the containing device, and in an inefficient closing thereof.

The combined operations carried out manually before and after the washing operations, moreover, are a bottle neck for the washing process itself, slowing down the overall treatment of the containing devices.

Solutions of automated plants for the processing of containing devices for animals are also known.

In particular, these automated plants comprise a plurality of manipulators configured to pick up a containing device, for example from a temporary store slider, in order to dispose it in a station to disassemble its components.

In the disassembly station, the manipulators not only separate the components of the containing device but also carry out operations to empty the tray and the trough, and feed the lid, the trough and the tray to the washer machine, disposing them, for example, on a transport belt, or a specific slider of the washer machine.

Known washer machines wash all the components of the containing device at the same time.

This entails high wastage of washing liquids and solutions since all the components of a containing device are subjected to the same washing action, even if not strictly necessary. It is known, in fact, that the tray and the trough are subjected to more soiling than the lid because, during use, they are in direct contact with the animals.

At exit from the washer machine there are other manipulators to assemble the components of the containing device and possibly to fill the tray with the absorbent material of the litter.

This processing apparatus is, however, particularly complex and difficult to manage because of the high number of machines and manipulators present.

Moreover, because of the high number of machines used, the known processing apparatus is also particularly costly.

Examples of known processing apparatuses are described in documents US-A-6,553,939, US-A-2011/0054669 and WO-A-2008/142788.

There is therefore a need to perfect an apparatus and a method for processing containing devices for animals that can overcome at least one of the disadvantages of the state of the art.

In particular, one purpose of the present invention is to make an apparatus for processing containing devices for animals that is simple to make, manage and control, that allows high productivity of the processing cycle and reduces, if not cancels, the down times of the process.

It is also a purpose of the invention to make an apparatus for processing containing devices for animals that is economical.

It is also a purpose of the present invention to make an apparatus that allows to reduce the waste of washing liquids and solutions.

It is also a purpose of the present invention to perfect a processing method for containing devices for animals that allows to increase the processing efficiency.

The Applicant has devised, tested and embodied the present invention to overcome the shortcomings of the state of the art and to obtain these and other purposes and advantages.

### SUMMARY OF THE INVENTION

The present invention is set forth and characterized in the independent claims, while the dependent claims describe other characteristics of the invention or variants to the main inventive idea.

Forms of embodiment of the present invention concern an apparatus for processing containing devices for animals, each of which containing device comprises a plurality of components reciprocally connectable to each other in an assembled condition, merely by way of example each comprising a tray, a trough, disposed in the tray during use, and a lid connectable to the tray.

According to one form of embodiment, the apparatus comprises a reception station for the containing devices to be processed, in an assembled condition in which the lid can be released from the combined tray and the trough, and a washing station able to receive the containing devices from the reception station and configured to wash the components of the containing devices.

In accordance with one aspect of the present invention, the washing station comprises a first washer machine configured to wash at least the tray and the trough and comprising one or more first operating units and a second washer machine configured to wash, in parallel, at least the lid of the containing devices, and comprising one or more second operating units.

In accordance with another aspect, the apparatus comprises a first robotized manipulator at entry configured to pick up and separate from each other the tray and the trough of each containing device from the reception station and to feed at least one of the components toward the first washer machine and the lid toward the second washer machine.

According to another aspect of the present invention, the apparatus comprises a second robotized manipulator at exit configured to pick up the tray and the trough exiting from the first washer machine and the lid exiting from the second washer machine after they have been processed and to assemble them with respect to each other.

The configuration of the apparatus described above allows to simplify the layout of the processing apparatus, and to simplify the control and management of its various machines or operating stations also as a function of the type of component that is processed.

Moreover, with the present invention it is possible to reduce the waste of washing products and optimize the washing and processing cycles of the specific components of the containing devices.

Furthermore, the present invention increases the productivity of the processing operations of the containing devices carried out by means of the apparatus and method described here, considerably reducing, if not cancelling, the down times of the process.

Forms of embodiment of the invention also concern a method for processing containing devices for animals, each comprising a plurality of components, including a tray, a trough and a lid, reciprocally connectable in an assembled condition.

Possible forms of embodiment of the invention provide that the method comprises:
- supplying the containing devices in an assembled condition, in which the lid can be released from the combined tray and trough at a reception station;
- separating the containing devices at least into the respective tray, trough and lid, by means of a first robotized manipulator at entry;
- feeding the tray and the trough toward a first washer machine, and washing the tray and the trough in the first washer machine;
- feeding the lid toward a second washer machine and washing, in the second washer machine, the lid in parallel with the washing of the tray and the trough in the first washer machine, and
- a subsequent assembly of at least the tray and the trough at exit from the first washer machine and the lid exiting from the second washer machine, after they have been processed, by means of a second robotized manipulator at exit, to reassemble the containing device.

These and other aspects, characteristics and advantages of the present disclosure will be better understood with reference to the following description, drawings and attached claims. The drawings, which are integrated and form part of the present description, show some forms of embodiment of the present invention, and together with the description, are intended to describe the principles of the disclosure.

The various aspects and characteristics described in the present description can be applied individually where possible. These individual aspects, for example aspects and characteristics described in the attached dependent claims, can be the object of divisional applications.

It is understood that any aspect or characteristic that is discovered, during the patenting process, to be already known, shall not be claimed and shall be the object of a disclaimer.

### BRIEF DESCRIPTION OF THE DRAWINGS

These and other characteristics of the present invention will become apparent from the following description of some forms of embodiment, given as a non-restrictive example with reference to the attached drawings wherein:
- fig. 1 is a plan view of an apparatus for processing containing devices for animals in accordance with a possible form of embodiment of the invention;
- fig. 2 is a lateral view of a part of the apparatus in fig. 1, in accordance with a possible form of embodiment;
- fig. 3 is a front view of a containing device for animals according to a possible form of embodiment;
- fig. 4 is a lateral view of fig. 3;
- fig. 5 is an exploded view of the device in figs. 3 and 4;
- fig. 6 is a view of a support body of components of the containing devices;
- fig. 7 is a view of a support body of the containing devices.

To facilitate comprehension, the same reference numbers have been used, where possible, to identify identical common elements in the drawings. It is understood that elements and characteristics of one form of embodiment can conveniently be incorporated into other forms of embodiment without further clarifications.

### DETAILED DESCRIPTION OF SOME FORMS OF EMBODIMENT

We shall now refer in detail to the various forms of embodiment of the present invention, of which one or more examples are shown in the attached drawing. Each example is supplied by way of illustration of the invention and shall not be understood as a limitation thereof. For example, the characteristics shown or described insomuch as they are part of one form of embodiment can be adopted on, or in association with, other forms of embodiment to produce another form of embodiment. It is understood that the present invention shall include all such modifications and variants.

Before describing these forms of embodiment, we must also clarify that the present description is not limited in its application to details of the construction and disposition of the components as described in the following description using the attached drawings. The present description can provide other forms of embodiment and can be obtained or executed in various other ways. We must also clarify that the phraseology and terminology used here is for the purposes of description only, and cannot be considered as limitative.

Forms of embodiment of the present invention, described with reference to the attached drawings, concern an apparatus 10 for processing containing devices 11 for animals, also called "cages". Here and in the present description, by the term "processing" we mean one or more operations of pre-washing, washing with water, washing with hot or cold water, washing with chemical agents, a combination of these washes, rinsing with hot or cold water, possible sterilization or heat-disinfection, possible drying and possible operating restoration of the containing device 11.

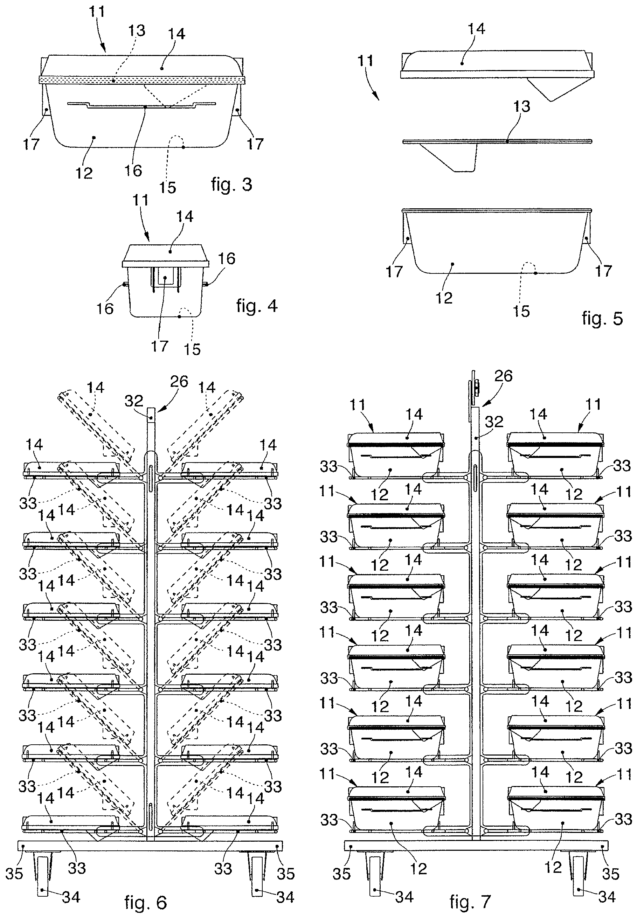

In accordance with some embodiments of the present invention, the containing devices 11 (figs. 3-5) for animals comprise a plurality of components, respectively 12, 13 and 14, reciprocally connected and configured to contain and rear animals.

In accordance with the forms of embodiment shown in figs. 3-5, each containing device 11 comprises a first component or tray 12, a second component or trough 13 disposed in the tray 12, and a third component or lid 14 positioned to close the tray 12. The trough 13, for example, can be formed by a grill and by seatings, or compartments, for food for the laboratory animals. The lid 14 instead can be provided with an insertion seating for a container to supply a feeding liquid, also called "feeding bottle", for laboratory animals, and possibly provided with air filters. The tray 12 can instead be formed by a drawer or similar containing bottom. The tray 12 can be an open box-like shape defining a seating 15 to house animals.

On the bottom of the seating 15, during normal use, a litter material is deposited, such as sawdust, sand, straw or a possible combination thereof.

The tray 12 can be provided, on its external surface, with gripping elements 16, configured to allow the manipulation at least of the tray 12.

In accordance with the forms of embodiment shown in figs. 3-5, the gripping elements 16 can comprise handles, protruding edges from the walls of the tray 12.

As explained above, the trough 13 can for example have a substantially or partly reticular structure, or grill-shape, and can be configured to contain and support the food that is supplied to the animals in the tray 12.

The trough 13 is positioned, during use, in the seating 15 of the tray 12.

The lid 14 is selectively positionable to close the tray 12 and the trough 13 disposed in the tray 12.

According to possible solutions, the tray 12 and the lid 14 can be made of a polymer material, for example polycarbonate.

In accordance with some solutions, the trough 13 can be made of metal, for example stainless steel, or galvanized or chromium steel.

According to possible solutions, at least one of either the tray 12 or the lid 14 is provided with connection elements 17 configured to define a reciprocal connection between the lid 14 and the tray 12. In accordance with possible solutions the connection elements 17 can comprise snap-in coupling, coupling by interference, same-shape coupling or other suitable couplings to define a selective constraint between the lid 14 and the tray 12.

In accordance with one form of embodiment of the present invention, the apparatus 10 comprises a washing station 18 configured to wash the containing devices 11.

According to one aspect of the present invention, the washing station 18 comprises a first washer machine 19 configured to wash at least one of either the trays 12 or the troughs 13, of the containing devices 11.

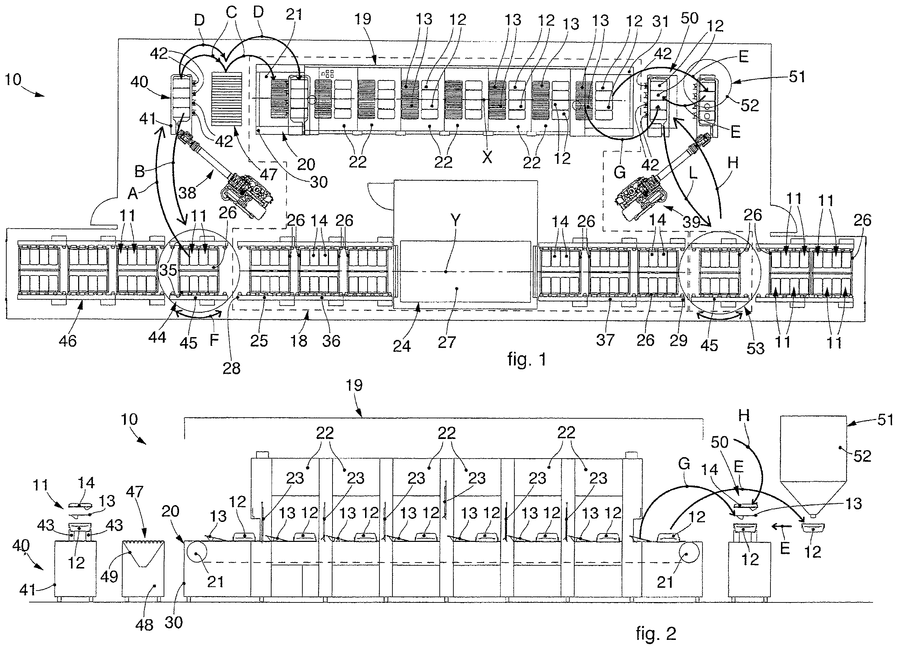

According to the form of embodiment shown in figs. 1 and 2, the first washer machine 19 is configured to wash both the trays 12 and the troughs 13.

In accordance with other forms of embodiment, not shown in the drawings, the apparatus can comprise two first washer machines 19, one of which configured to wash the trays 12 and the other the troughs 13. This form of embodiment allows to optimize the washing cycles and the washing spaces as a function of the specific bulk of the components of the containing devices 11.

In accordance with a possible form of embodiment, the first washer machine 19 comprises a loading end 30 into which the trays 12 and the troughs 13 are loaded, and a discharge end 31 from which the trays 12 and the troughs 13 are discharged.

In accordance with a possible form of embodiment, the first washer machine 19 can comprise a plurality of first operating units 22, in each of which a specific operation is carried out.

In possible implementations the operating units 22 can comprise at least one of the following: pre-washing unit, washing solution distribution unit, rinsing unit, drying unit, sterilization unit, heat disinfection unit or a possible combination thereof.

According to a possible implementation the operating units 22 can be disposed aligned along a first operating axis X, according to a configuration also known as pass-through. In this case the loading end 30 is disposed in an opposite position with respect to the discharge end 31.

According to a possible variant, not shown in the drawings, the operating units 22 can be disposed according to a path with parallel branches, adjacent, in which one of the ends of one branch is connected to the end of the other branch, and the other ends of the branches respectively define the loading end 30 and the discharge end 31 of the trays 12 and troughs 13. In this case a configuration of the first washer machine 19 of the single side type is defined, that is, in which the loading end 30 and the discharge end 31 are disposed in correspondence with the same operating side.

The first washer machine 19 can be provided with a first feed device 20 configured to feed at least one of the components of the containing device 11, in this case the tray 12 and the trough 13, to the first washer machine 19.

According to a possible form of embodiment, not shown in the drawings, the first feed device 20 can comprise a temporary collection container, or basket, in which one or more components of the containing device 11 are disposed. The container or basket can be used, for example, if the first washer machine 19 is the type with a discontinuous load.

In accordance with a possible variant, shown in figs. 1 and 2, the first feed device 20 can comprise a transporter 21, for example a transport belt, configured to support and transfer the components to be washed into the first washer machine 19. This solution can be advantageous if the first washer machine 19 is the continuous-load type.

In accordance with a possible solution of the present invention, shown for example with reference to figs. 1 and 2, the transporter 21 is disposed through, through the operating units 22, so as to feed the components 12, 13 of the containing device 11 into the first washer machine 19.

In accordance with some solutions of the present invention, the operating units 22 can be reciprocally compartmentalized with the help of walls, dividers or doors 23, selectively able to be activated/removed.

According to another form of embodiment of the present invention, the apparatus 10 comprises a second washer machine 24 configured to wash at least one of the components of the containing devices 11, in this case the lids 14.

In accordance with a possible form of embodiment the second washer machine 24 is disposed adjacent to the first washer machine 19.

In accordance with a possible solution the second washer machine 24 develops longitudinally along a second operating axis Y. The second operating axis Y can be located substantially parallel to the first operating axis X.

The second washer machine 24 can be provided with a plurality of second operating units 27 in the same way as those described with reference to the first washer machine 19.

In accordance with a possible solution, the operating units 27 of the second washer machine 24 can be disposed according to a pass-through configuration, or, alternatively, according to a single side configuration.

In accordance with the form of embodiment of fig. 1, the second washer machine 24 has a pass-through configuration and is provided with an entrance end 28 of the lids 14 and an exit end 29 of the lids 14 located in a position opposite to the entrance end 28.

According to a possible solution shown in figs. 1 and 2, the entrance end 28 of the second washer machine 24 and the loading end 30 of the first washer machine 19 face toward the same first operating side.

The exit end 29 of the second washer machine 24 and the discharge end 31 of the first washer machine 19 face toward the same second operating side.

In possible solutions, shown for example in fig. 1, the second washer machine 24 is provided with a second feed device 25 configured to feed the lids 14 into the second washer machine 24.

The second feed device 25 can comprise a transport belt, a translating platform, transfer belts, motorized roller ways, or similar or comparable devices suitable to allow the transfer of the lids 14 into the second washer machine 24.

According to possible solutions, the second feed device 25 can be configured at least to transfer one or more support bodies, in this case support sliders 26 (fig. 6) on which the lids 14 to be washed are disposed.

The support sliders 26 can comprise a support frame 32 and one or more support planes 33 attached to the support frame 32. On each support plane 33 one or more lids 14 are disposed. In particular, the support slider 26 can therefore be the multiplane type.

In accordance with a possible form of embodiment, the support planes 33 can be disposed one on top of the other to define at least a column of support planes 33.

In accordance with another form of embodiment, the support planes 33 can be disposed alongside and adjacent to each other. In this case the support planes 33 can also define two or more columns located alongside each other.

According to a possible solution, the support planes 33 of the support sliders 26 are configured to assume at least a first position in which they are disposed substantially horizontal, and a second position, shown in fig. 6 with dotted lines, in which they are disposed inclined with respect to the horizontal in order to allow for example the washing substances used to flow out. In accordance with a possible solution, in the second position the support planes 33 are inclined by an angle of about 45° with respect to the horizontal.

According to a possible embodiment of the present invention, a movement device, not shown in the drawings, can be associated with the support planes 33 in order to allow to selectively take all the support planes 33 of a support slider 26 from their first position to their second position, or vice versa.

In accordance with the form shown in fig. 6, the support sliders 26 are provided with two operating sides 35, opposite each other, in correspondence with each of which it is possible to insert or remove the lids 14.

The support sliders 26 can be provided with wheels 34 attached to the support frame 32 and configured to allow the translation of the support slider 26, for example in the second washer machine 24.

In accordance with a possible solution, the support slider 26 can be selectively moved on its wheels 34 by a thrust action of the second feed device 25.

According to a possible implementation, the second feed device 25 can comprise a belt, a cable or a chain provided with attachment elements to selectively attach a part of the support slider 26 and to draw it along a predefined path at least inside the second washer machine 24.

In accordance with possible solutions, the second washer machine 24 can comprise at least one of either a feed line 36 or a discharge line 37 for the lids 14, interposed between the operating units 27 and configured to feed and respectively discharge the lids 14 from the operating units 27.

The feed line 36 and/or the discharge line 37 and the operating units 27 can be disposed substantially aligned along the second operating axis Y.

In accordance with a possible form of embodiment of the present invention, the apparatus 10 comprises a first robotized manipulator at entry 38 configured to separate the components 12, 13, 14 of each containing device 11 from each other and to feed at least one of the components toward the first washer machine 19 and at least one other of the components toward the second washer machine 24.

According to a possible solution, the first robotized manipulator at entry 38 is located upstream of the first washer machine 19 and the second washer machine 24. In this way the first robotized manipulator at entry 38 is able to directly supply the trays 12 and the troughs 13 at entry, toward the loading end 30 of the first washer machine 19, and to supply the lids 14 toward the entrance end 28 of the second washer machine 24.

In accordance with a possible solution, the apparatus 10 comprises at least a first robotized manipulator at entry 38 configured both to separate the components 12, 13, 14 from each other and to feed the latter respectively toward the first washer machine 19 and toward the second washer machine 24. In particular a single first robotized manipulator at entry 38 can advantageously be provided. This allows to reduce the overall costs of the apparatus 10, to reduce the maneuvering spaces and to simplify the management and control of the apparatus 10.

Other forms of embodiment can however provide to use more first manipulators at entry 38, each of which is suitable to carry out a predefined operation.

In accordance with the form of embodiment in figs. 1 and 2, the first robotized manipulator at entry 38 is configured to feed the tray 12 and the trough 13 of each containing device 11 toward the first washer machine 19, and to feed the lid 14 of each containing device 11 toward the second washer machine 24.

In accordance with another form of embodiment, the apparatus 10 comprises a second robotized manipulator at exit 39 configured to pick up the components 12, 13, 14 from the first washer machine 19 and the second washer machine 24 and to assemble them with respect to each other.

According to a possible solution, the second robotized manipulator at exit 39 is located downstream of the first washer machine 19 and the second washer machine 24. In this way the second robotized manipulator at exit 39 can pick up the respective components 12, 13, 14 from the discharge end 31 and from the exit end 29.

In accordance with a possible solution, the apparatus 10 comprises at least a second robotized manipulator at exit 39 configured to both pick up the components 12, 13, 14 from the first washer machine 19 and from the second washer machine 24, and to assemble the components 12, 13, 14 with respect to each other to make the containing device 11 ready for use. In particular, a single second robotized manipulator at exit 39 can advantageously be provided. This allows to reduce the overall costs of the apparatus 10, to reduce maneuvering spaces and to simplify the management and control of the apparatus 10.

Other forms of embodiment can however provide to use several second robotized manipulators at exit 39, each of which is suitable to carry out a predefined operation.

According to possible forms of embodiment of the present invention the first robotized manipulator at entry 38 and the second robotized manipulator at exit 39 can be chosen from a group comprising a SCARA, PUMA, Delta, double SCARA or Cartesian robot.

In accordance with a possible form of embodiment, the first robotized manipulator at entry 38 and the second robotized manipulator at exit 39 are the anthropomorphic type.

According to possible solutions, the first robotized manipulator at entry 38 and the second robotized manipulator at exit 39 can be provided with gripping heads, suckers, automated pincers or similar.

According to a possible form of embodiment, combinable with the forms of embodiment described here, the apparatus 10 comprises a separation station 40 configured at least to support at least one containing device 11 during the operations of separating the components 12, 13, 14.

According to a possible form of embodiment of the present invention, the separation station 40 is positioned upstream of the first washer machine 19 and the second washer machine 24.

In accordance with a possible solution, the separation station 40 can be disposed substantially aligned to the first operating axis X of the first washer machine 19.

The separation station 40 can comprise a support structure 41 in which at least one of the containing devices 11 is positioned to allow the separation operations on the components 12, 13, 14.

In accordance with some variants, the lids 14 can be previously released from the tray 12, deactivating the connection elements 17, for example manually by an operator, at the same time as the laboratory animal is removed from inside them. This allows the disassembling action of the first robotized manipulator at entry 38.

In other variants, the support structure 41 can be provided with actuation members 42 configured to actuate the connection elements 17 in the tray 12 and at least allow them to be deactivated. This allows to reciprocally separate the lid 14 from the trays 12.

The support structure 41 can comprise positioning elements 43 configured to receive and hold at least the tray 12 of the containing device 11.

In accordance with a possible solution, the first robotized manipulator at entry 38 is configured to position, on each occasion, at least one containing device 11 in the support structure 41, and to carry out the separation of the components 12, 13, 14 of the containing device 11.

According to possible forms of embodiment the apparatus 10 comprises a reception station 44 disposed upstream of the first washer machine 19 and the second washer machine 24 and configured to receive the containing device 11 to be processed. In some forms of embodiment, each containing device 11 to be processed is supplied to the reception station 44 after the laboratory animal has been removed from inside it. Moreover, each containing device 11 to be processed can be supplied to the reception station 44 in an assembled condition, with the lid released from the combined tray and trough.

The reception station 44 can be located upstream of the first washer machine 19 and the second washer machine 24.

In accordance with the form of embodiment in fig. 1, the reception station 44 is configured to receive at least a support body, or support slider (fig. 7) which, in this case, corresponds to the support slider 26 used to transfer the lids 14 into the second washer machine 24.

According to a possible form of embodiment, the first robotized manipulator at entry 38 can be positioned in an intermediate position between the reception station 44 and the separation station 40.

According to a possible solution, the reception station 44 is disposed substantially aligned with the second operating axis Y of the second washer machine 24.

According to a possible form of embodiment, the reception station 44 can be located in proximity to the entrance end 28 of the second washer machine 24 and is configured to transfer the support slider 26 at entry to the second washer machine 24.

In this way the support sliders 26 used to support the containing devices 11 to be processed can be used to also support the lids 14 during the washing cycle to which they are subjected in the second washer machine 24.

In accordance with a possible solution, the reception station 44 can comprise a rotating platform or table 45 on which at least one support slider 26 is positioned with the containing devices 11 to be processed.

The rotating platform 45 is configured to rotate upon itself around a vertical axis of rotation and in the direction indicated by the arrow F in fig. 1.

In this way, the support slider 26 that is positioned on the rotating platform 45 can rotate on itself to dispose, on each occasion, one of its operating sides 35 in a position directly accessible by the first robotized manipulator at entry 38 to pick up the containing devices 11.

In accordance with other forms of embodiment of the present invention, the first robotized manipulator at entry 38 can be configured to pick up, on each occasion, one or more containing devices 11 at a time from the support slider 26 and transfer them into the separation station 40.

In fig. 1, the pick-up of the containing devices 11 from the support slider 26 and the transfer thereof into the separation station 40 is indicated by the arrow A.

In accordance with another form of embodiment, once it has positioned the containing devices 11 in the separation station 40, the first robotized manipulator at entry 38 is configured to pick up from the latter only the lids 14 of the containing devices 11, to transfer them toward the second washer machine 24.

According to a possible form of embodiment of the present invention, the first robotized manipulator at entry 38 is configured to pick up only the lids 14 of the containing devices 11 present in the separation station 40 in order to position them in the support slider 26 present in the reception station 44.

The transfer of the lids 14 from the separation station 40 to the reception station 44 is indicated in fig. 1 by the arrow B.

In this way the support planes 33 previously freed by the removal of the containing devices 11 are occupied by the lids 14 alone.

Therefore the same support slider 26 can be used both to transfer the containing devices 11 and also to support and transfer the lids 14 to be processed into the second washer machine 24. This solution allows to wash not only the lids 14 but also the support slider 26 on which the containing devices 11 to be processed were previously disposed.

Therefore the support slider 26 and the lids 14, exiting from the second washer machine 24, are clean.

Upstream of the reception station 44 a feed station 46 can be provided, configured to feed one or more support sliders 26 to the reception station 44.

According to a possible form of embodiment, the feed station 46 can comprise a motorized path configured to move one or more support sliders 26.

According to a possible solution, the apparatus 10 comprises an emptying station 47 configured to collect the content of the tray 12 and the trough 13 of each of the containing devices 11.

The emptying station 47 can be provided with a vibrating unit 48 configured to induce vibrations on the trays 12 and troughs 13 suitable to allow to discharge the material contained in the trays 12 and troughs 13. The emptying station 47 can also comprise a discharge hopper 49 to allow to discharge the material from the vibrating unit 48.

According to possible solutions the emptying station 47 can be governed by suction devices provided to take in the powders that can be generated and to prevent them from being dispersed in the environment.

According to a possible solution the emptying station 47 can be positioned aligned to the first operating axis X.

According to one solution the emptying station 47 is located upstream of the first washer machine 19.

In accordance with a possible implementation, the emptying station 47 can be located in proximity to the loading end 30 of the first washer machine 19.

According to another solution, the emptying station 47 can be positioned between the separation station 40 and the first washer machine 19.

According to a possible solution, once it has positioned the containing devices 11 in the separation station 40 and has picked up from the latter the corresponding lids 14 in order to position them on the support slider 26, the first robotized manipulator at entry 38 transfers the troughs 13 and trays 12 to the emptying station 47 and subsequently to the first washer machine 19.

In accordance with a possible form of embodiment of the present invention, the first robotized manipulator at entry 38 carries out a first transfer of the troughs 13 from the separation station 40 to the emptying station 47 and their subsequent transfer from the emptying station 47 into the first washer machine 19, according to the path indicated by the arrows C in fig. 1.

In accordance with another form of embodiment of the present invention the first robotized manipulator at entry 38 carries out a first transfer of the trays 12 from the separation station 40 into the emptying station 47 and a subsequent transfer thereof from the emptying station 47 into the first washer machine 19, according to the path indicated by the arrows D in fig. 1.

In accordance with another form of embodiment of the present invention, the first robotized manipulator at entry 38 first carries out the transfer of the troughs 13 and then that of the trays 12.

According to a possible form of embodiment of the present invention, the first robotized manipulator at entry 38 can also carry out a combined transfer action of the troughs 13 and trays 12 toward the emptying station 47 and the first washer machine 19.

According to another aspect of the present invention, the apparatus comprises an assembly station 50 configured at least to support the tray 12 during the assembly operations with the trough 13 and the lid 14.

In accordance with a possible solution the assembly station 50 is located downstream of the first washer machine 19 and the second washer machine 24.

According to a possible form of embodiment of the present invention the assembly station 50 can have a configuration similar to that of the separation station 40, that is, it is provided with positioning elements 43 configured to support the tray 12, and possible actuation members 42 configured to actuate the connection elements 17 provided in the trays 12 in order to allow connection with the lids 14. Or, in other variants, the connection elements 17 can be activated, for example manually by an operator, after the laboratory animal has been reintroduced into the containing devices 11 which have been processed.

In accordance with a possible form of embodiment of the invention, the assembly station 50 is located downstream of the first washer machine 19 and the second washer machine 24, and can be substantially aligned to the first operating axis X.

According to another form of embodiment, the assembly station 50 is located substantially in proximity to the discharge end 31 of the first washer machine 19.

According to a possible solution, the second robotized manipulator at exit 39 is configured to move the trays 12 and troughs 13 from the first washer machine 19 to the assembly station 50 in order to reciprocally position them. The second robotized manipulator at exit 39 can subsequently move the lids 14 from the second washer machine 24 to the assembly station 50 in order to carry out the connection of the lids 14 to the trays 12.

In a possible form of embodiment of the present invention, the apparatus 10 also comprises a filling station 51 located downstream of the first washer machine 19 and the second washer machine 24, configured to fill the trays 12 with a filler material such as sawdust, sand or other material suitable to define a litter for the trays 12.

The filling station 51 can comprise a hopper 52 configured to contain and selectively discharge the filler material into the tray 12.

In accordance with a possible solution, the second robotized manipulator at exit 39 is configured to pick up the trays 12 from the first washer machine 19 toward the filling station 51 and then from the filling station 51 to the assembly station 50 according to the path indicated by the arrows E in fig. 1.

According to another form of embodiment of the invention, the second robotized manipulator at exit 39 is configured to transfer the troughs 13 from the first washer machine 19 to the assembly station 50 according to the path indicated by the arrow G. This allows to position the troughs 13 in the respective seatings 15 of the trays 12.

In accordance with another form of embodiment of the present invention, the second robotized manipulator at exit 39 is configured to transfer the lids 14 processed by the second washer machine 24 into the assembly station 50 and to connect the tray 12 and the trough 13 to each other. This transfer of the lids 14 is indicated by the arrow H in fig. 1.

Once the assembly of the trough 13 and the lid 14 to the tray 12 has been carried out, the second robotized manipulator at exit 39 is configured to transfer the containing devices 11 thus obtained from the assembly station 50 toward a discharge station 53 according to the path indicated by the arrow L.

The discharge station 53 can be located inside the second washer machine 24 and correspond with the zone from which the lids 14 are picked up in order to be taken to the assembly station 50.

In accordance with a possible form of embodiment, the discharge station 53 can be located substantially aligned with the second operating axis Y, and possibly in direct proximity to the exit end 29 of the second washer machine 24.

In accordance with a possible form of embodiment, the discharge station 53 is configured to house one or more of the support sliders 26 coming from the second washer machine 24 and on which the washed lids 14 are disposed.

In accordance with one solution the second robotized manipulator at exit 39 is located between the assembly station 50 and the discharge station 53 and is configured to transfer at least one of the components, in this case the lids 14, from the discharge station 53 to the assembly station 50.

In this way the second robotized manipulator at exit 39 can pick up the processed lids 14 from the support planes 33 of the support sliders 26, can couple the lids 14 with the trays 12 and the troughs 13, and can transfer the containing devices 11 thus obtained once again onto the support planes 33 from which the lids 14 have been picked up. This allows to optimize the processing cycle of the containing devices 11 and to simplify the management of the apparatus 10.

According to a possible solution, the discharge station 53 can be provided with a rotating platform 45 similar to that described with reference to the reception station 44. In this way it is possible to pick up the lids 14 and respectively load the containing devices 11 on both operating sides 35 of the support slider 26.

In accordance with some forms of embodiment, combinable with all the forms of embodiment described here, it is provided that the support slider 26 is received on the rotating platform 45 at the reception station 44. The support slider 26, as explained above, is the multiplane type and carries the containing devices 11 to be processed. The laboratory animal is removed from the containing devices 11 before the support slider 26 transports them toward the reception station 44. To remove the laboratory animal it is essentially necessary first of all to open the containing devices 11.

After this, the containing devices 11, with the connection elements 17 unclamped or released, are taken by the support slider 26 onto the rotating platform 45, where they remain on stand-by for disassembly. Here the first robotized manipulator at entry 38 starts to pick up the containing devices 11 on the side of the support slider 26 nearest the first robotized manipulator at entry 38 itself. Therefore, in this step, the lid 14 of each containing devices 11 is in a released condition with respect to the combined tray 12 and trough 13, that is, disposed above these as a cover, but free to be raised, without clamping constraints.

A containing device 11 is thus located on the separation station 40 and from here the first robotized manipulator at entry 38 picks up the lid 14, which as we said is free and released, that is, it is not in this step constrained to the tray 12 by means of the connection elements 17, otherwise the first robotized manipulator at entry 38 would not be able to separate the lid 14 from the tray 12.

At this point the lid 14 is disposed by the first robotized manipulator at entry 38 in the support slider 26 occupied previously by the containing device 11 to be processed. Moreover, the first robotized manipulator at entry 38 picks up the trough 13 and delivers it to the first washer machine 19, in particular positioning it on the feed devices 20 that serve the entrance of the first operating units 22.

Moreover, the first robotized manipulator at entry 38 then picks up the remaining tray 12 and delivers this too to the first washer machine 19, in the same way as the trough 13. Advantageously, the tray 12 is positioned in front of the respective trough 13 in the first washer machine 19 so that at exit a logical order of re-assembly is respected. The possible content of the trough 13 and the tray 12 is preferably emptied at the emptying station 47.

Once the first robotized manipulator at entry 38 has emptied all one side of the support slider 26, the rotating platform 45 makes the support slider 26 rotate by 180°, so that the opposite side too is brought into proximity to the first robotized manipulator at entry 38 and can be emptied.

The first robotized manipulator at entry 38 picks up all the containing devices 11 also located on this other side, and at the end of the disassembly operation we will have the situation in which this support slider 26 will have been filled only with the lids 14 of the containing devices 11, while the corresponding troughs 13 and trays 12 will have been supplied according to the desired order and disposition to the first washer machine 19.

Advantageously, at this point, the support planes 33 of the support slider 26, on which the lids 14 are stably disposed, are inclined as described above and the support slider 26 thus configured is delivered to the second washer machine 24.

On exit after the wash, the second robotized manipulator at exit 39 picks up each tray 12 coming from the first washer machine 19, fills it at the filling station 51 and then associates it with the trough 13, also exiting from the first washer machine 19.

After this, the second robotized manipulator at exit 39 picks up also a corresponding lid 14 from the support slider 26 exiting from the second washer machine 24, associates it with the combined tray 12 and trough 13 already formed, obtaining once again the containing device 11, which is washed and filled as required.

Each containing device 11 thus re-formed and processed is disposed once again in the support slider 26, in place of the respective lid 14 that has just been removed. Advantageously, in this way, the support slider 26 that takes the lids 14 is also processed and washed at every wash cycle through the second washer machine 24.

The containing devices 11, washed, reassembled and re-supplied, can however be advantageously kept with the lid 14 released, so that the laboratory animal can be re-introduced inside, after which the lid 14 is clamped by the connection elements 17, for example manually by an operator.

According to one form of embodiment, combinable with all the forms of embodiment described here, a store station can be provided for troughs 13 of different types, so that, according to needs, the second robotized manipulator at exit 39 can pick up and associate with the tray 12 a trough 13 of a different type from the one just processed.

It is clear that modifications and/or additions of parts and/or steps may be made to the apparatus 10 for processing animal containing devices and the corresponding method as described heretofore, without departing from the field and scope of the present invention.

It is also clear that, although the present invention has been described with reference to some specific examples, a person of skill in the art shall certainly be able to achieve many other equivalent forms of apparatus for processing animal containing devices and respective method, having the characteristics as set forth in the claims and hence all coming within the field of protection defined thereby.

In the following claims, the reference numbers in brackets have the sole purpose of facilitating reading and must not be considered as limiting factors with regard to the field of protection as set forth in the specific claims.

## Claims

1. Apparatus for processing containing devices (11) for animals, each of which containing devices (11) comprises a plurality of components (12, 13, 14), including a tray (12), a trough (13) and a lid (14), which can be reciprocally connected in an assembled condition, said apparatus comprising at least:
- a reception station (44) for the containing devices (11) to be processed, in an assembled condition in which the lid (14) is released from the combined tray (12) and trough (13),
- a washing station (18) able to receive the containing devices (11) from the reception station (44) and configured to wash said components (12, 13, 14), **characterized in that**
said washing station (18) comprises:
a first washer machine (19) configured to wash at least said tray (12) and said trough (13) and comprising one or more first operating units (22),
a second washer machine (24) configured to wash in parallel said lid (14) and comprising one or more second operating units (27),
**and in that** said apparatus also comprises:
- a first robotized manipulator at entry (38) configured to pick up and separate from each other the components (12, 13, 14) of each containing device (11) from the reception station (44) and to feed said tray (12) and said trough (13) toward the first washer machine (19) and said lid (14) toward the second washer machine (24), and
- a second robotized manipulator at exit (39) configured to pick up said tray (12) and said trough (13) exiting from the first washer machine (19) and said lid (14) exiting from the second washer machine (24) after they have been processed and to assemble them with respect to each other.

2. Apparatus as in claim 1, **characterized in that** it comprises a separation station (40) positioned upstream of the first washer machine (19) and the second washer machine (24) and configured at least to support at least one containing device (11) during the separation of the components (12, 13, 14).

3. Apparatus as in claim 2, **characterized in that** said separation station (40) is interposed between said reception station (44) and said first washer machine (19).

4. Apparatus as in claim 2 or 3, **characterized in that** said first robotized manipulator at entry (38) is located in an intermediate position between the reception station (44) and the separation station (40), and is configured to pick up said containing devices (11) from said reception station (44) and to transfer them into said separation station (40).

5. Apparatus as in any claim hereinbefore, **characterized in that** it comprises at least a support body (26) provided to support a plurality of said containing devices (11) to be processed.

6. Apparatus as in claim 5, **characterized in that** said at least one support body (26) is the multiplane type, provided with a plurality of support planes (33) able to stably support the containing devices (11) supplied to the reception station (44) and the lids (14) to be processed supplied to the second washer machine (24).

7. Apparatus as in claim 6, **characterized in that** said support planes (33) can be inclined.

8. Apparatus as in claim 5, 6 or 7, **characterized in that** said support body comprises a support slider (26).

9. Apparatus as in any of the claims from 5 to 8, **characterized in that** said reception station (44) is configured to receive said at least one support body (26).

10. Apparatus as in claim 9, **characterized in that** said reception station (44) is located in proximity to an entrance end (28) to the second washer machine (24) and is configured to transfer said support body (26) at entry to said second washer machine (24).

11. Apparatus as in any claim hereinbefore, **characterized in that** it comprises an emptying station (47) configured to empty and collect the content of said tray (12) and said trough (13) of said containing devices (11), **and in that** said first robotized manipulator at entry (38) is configured to transfer said tray (12) and said trough (13) from said emptying station (47) to said first washer machine (19).

12. Apparatus as in any claim hereinbefore, **characterized in that** it comprises an assembly station (50) located downstream of said first washer machine (19) and of said second washer machine (24) and configured at least to support at least said tray (12) during the assembly operations with said trough (13) and said lid (14), **and in that** said second robotized manipulator at exit (39) is configured to transfer said tray (12) and said trough (13) from said first washer machine (19) and respectively said lid (14) from said second washer machine (24) to said assembly station (50).

13. Apparatus as in any claim hereinbefore, **characterized in that** it comprises a discharge station (53) configured to house at least a support body (26) coming from said second washer machine (24) and on which at least one of said components (14) is disposed.

14. Apparatus as in claims 12 and 13, **characterized in that** said second robotized manipulator at exit (39) is disposed between said assembly station (50) and said discharge station (53) and is configured to transfer at least said lid (14) from said discharge station (53) to said assembly station (50).

15. Apparatus as in any claim hereinbefore, **characterized in that** it comprises a filling station (51) located downstream of said first washer machine (19) and of said second washer machine (24) and configured to fill said tray (12) with a filling material, suitable to define a litter.

16. Apparatus as in any claim hereinbefore, **characterized in that** said first operating units (22) are disposed aligned along a first operating axis (X) and said second operating units (27) are disposed aligned along a second operating axis (Y) parallel to said first operating axis (X).

17. Apparatus as in any claim hereinbefore, **characterized in that** said reception station (44) comprises a rotating platform (45) configured to rotate on itself around a vertical axis of rotation.

18. Apparatus as in claim 17 combined with any of the claims from 5 to 10, **characterized in that** said rotating platform (45) is able to receive and rotate said support body (26).

19. Method for processing containing devices (11) for animals, each comprising a plurality of components (12, 13, 14), including a tray (12), a trough (13) and a lid (14), reciprocally connectable in an assembled condition, **characterized in that** it comprises:
- supplying said containing devices (11) in an assembled condition in which the lid (14) is released from the combined tray (12) and trough (13) at a reception station (44);
- separating said containing devices (11) at least into the respective tray (12), trough (13) and lid (14) by means of a first robotized manipulator at entry (38);
- feeding said tray (12) and said trough (13) toward a first washer machine (19), and washing said tray (12) and said trough (13) in said first washer machine (19);
- feeding said lid (14) toward a second washer machine (24) and washing, in said second washer machine (24), said lid (14) in parallel with the washing of said tray (12) and said trough (13) in the first washer machine (19), and
- a subsequent assembly of said tray (12) and said trough (13) exiting from the first washer machine (19) and said lid (14) exiting from the second washer machine (24), after they have been processed, by means of a second robotized manipulator at exit (39).

20. Method as in claim 19, **characterized in that** said containing devices (11) to be processed are supplied on a support body (26) and subsequently removed from said support body (26) for the separation of the components (12, 13, 14).

21. Method as in claim 20, **characterized in that,** after separation from said containing device (11), said lid (14) is positioned on said support body (26), **and in that** during said second wash said lid (14) is transferred into said second washer machine (24) on said support body (26).

22. Method as in claim 21, **characterized in that** after said second wash said lid (14) is removed from said support body (26) and assembled with the tray (12) and the trough (13) to define one of said containing devices (11), **and in that** after assembly said containing devices (11) are positioned on said support body (26).

## Patentansprüche

1. Apparat zur Behandlung von Behältervorrichtungen (11) für Tiere, von denen jede Behältervorrichtung (11) eine Vielzahl von Bestandteilen (12, 13, 14), einschließlich eines Tablettes (12), eines Troges (13) und eines Deckels (14), umfasst, die in einem montierten Zustand wechselseitig verbunden werden können, wobei der Apparat zumindest Folgendes umfasst:
- eine Empfangsstation (44) für die zu behandelnden Behältervorrichtungen (11), in einem montierten Zustand, in dem der Deckel (14) vom verbundenen Tablett (12) und vom Trog (13) ausgelöst ist,
- eine Waschstation (18), die imstande ist, die Behältervorrichtungen (11) von der Empfangsstation (44) zu empfangen, und die dafür ausgelegt ist, die genannten Bestandteile (12, 13, 14) zu waschen, **dadurch gekennzeichnet, dass**
die Waschstation (18) umfasst:
eine erste Waschmaschine (19), die dafür ausgelegt ist, zumindest das Tablett (12) und den Trog (13) zu waschen, und die eine oder mehrere erste Betriebseinheiten (22) umfasst,
eine zweite Waschmaschine (24), die dafür ausgelegt ist, den Deckel (14) parallel zu waschen, und die eine oder mehrere zweite Betriebseinheiten (27) umfasst,
**und dass** der Apparat auch umfasst:
- einen ersten robotisierten Manipulator am Eintritt (38), der dafür ausgelegt ist, die Bestandteile (12, 13, 14) jeder Behältervorrichtung (11) von der Empfangsstation (44) zu entnehmen und voneinander zu trennen und das Tablett (12) und den Trog (13) zur ersten Waschmaschine (19) hin und den Deckel (14) zur zweiten Waschmaschine (24) hin zuzuführen, und
- einen zweiten robotisierten Manipulator am Austritt (39), der dafür ausgelegt ist, das Tablett (12) und den Trog (13), die aus der ersten Waschmaschine (19) austreten, und den Deckel (14), der aus der zweiten Waschmaschine (24) austritt, dann zu entnehmen, nachdem sie behandelt worden sind, und sie relativ zueinander zu montieren.

2. Apparat nach Anspruch 1, **dadurch gekennzeichnet, dass** er eine Trennstation (40) umfasst, die stromauf der ersten Waschmaschine (19) und der zweiten Waschmaschine (24) positioniert ist, und die zumindest dafür ausgelegt ist, um zumindest eine Behältervorrichtung (11) während der Trennung der Bestandteile (12, 13, 14) zu stützen.

3. Apparat nach Anspruch 2, **dadurch gekennzeichnet, dass** die Trennstation (40) zwischen der Empfangsstation (44) und der ersten Waschmaschine (19) zwischengeschaltet ist.

4. Apparat nach Anspruch 2 oder 3, **dadurch gekennzeichnet, dass** der erste robotisierte Manipulator am Eintritt (38) in einer Zwischenstellung zwischen der Empfangsstation (44) und der Trennstation (40) angeordnet ist, und dafür ausgelegt ist, die Behältervorrichtungen (11) aus der Empfangsstation (44) zu entnehmen und sie in die Trennstation (40) hinein zu überführen.

5. Apparat nach einem der vorhergehenden Ansprüche, **dadurch gekennzeichnet, dass** er zumindest einen Stützkörper (26) umfasst, der vorgesehen ist, um eine Vielzahl von zu behandelnden Behältervorrichtungen (11) zu stützen.

6. Apparat nach Anspruch 5, **dadurch gekennzeichnet, dass** der zumindest eine Stützkörper (26) des Mehrebenen-Typs ist, mit einer Vielzahl von Stützebenen (33) versehen ist, die imstande sind, die Behältervorrichtungen (11), die zur Empfangsstation (44) zugeführt werden, und die zu behandelnden Deckel (14), die zur zweiten Waschmaschine (24) zugeführt werden, stabil zu stützen.

7. Apparat nach Anspruch 6, **dadurch gekennzeichnet, dass** die Stützebenen (33) geneigt sein können.

8. Apparat nach Anspruch 5, 6 oder 7, **dadurch gekennzeichnet, dass** der Stützkörper einen Stützschieber (26) umfasst.

9. Apparat nach einem der Ansprüche 5 bis 8, **dadurch gekennzeichnet, dass** die Empfangsstation (44) dafür ausgelegt ist, um den zumindest einen Stützkörper (26) zu empfangen.

10. Apparat nach Anspruch 9, **dadurch gekennzeichnet, dass** die Empfangsstation (44) in der Nähe eines Eintrittsendes (28) in die zweite Waschmaschine (24) angeordnet ist und dafür ausgelegt ist, um den Stützkörper (26) zum Eintritt in die zweite Waschmaschine (24) zu überführen.

11. Apparat nach einem der vorhergehenden Ansprüche, **dadurch gekennzeichnet, dass** er eine Entleerungsstation (47) umfasst, die dafür ausgelegt ist, den Inhalt des Tablettes (12) und des Troges (13) der Behältervorrichtungen (11) zu entleeren und zu sammeln, **und dass** der erste robotisierte Manipulator am Eintritt (38) dafür ausgelegt ist, um das Tablett (12) und den Trog (13) von der Entleerungsstation (47) zur ersten Waschmaschine (19) zu überführen.

12. Apparat nach einem der vorhergehenden Ansprüche, **dadurch gekennzeichnet, dass** er eine Montagestation (50) umfasst, die stromab der ersten Waschmaschine (19) und der zweiten Waschmaschine (24) angeordnet ist und zumindest dafür ausgelegt ist, um zumindest das Tablett (12) während der Montageoperationen mit dem Trog (13) und mit dem Deckel (14) zu stützen, **und dass** der zweite robotisierte Manipulator am Austritt (39) dafür ausgelegt ist, um das Tablett (12) und den Trog (13) von der ersten Waschmaschine (19) beziehungsweise den Deckel (14) von der zweiten Waschmaschine (24) zur Montagestation (50) zu überführen.

13. Apparat nach einem der vorhergehenden Ansprüche, **dadurch gekennzeichnet, dass** er eine Abführstation (53) umfasst, die dafür ausgelegt ist, um zumindest einen Stützkörper (26) aufzunehmen, der von der zweiten Waschmaschine (24) kommt und auf welchem zumindest einer der Bestandteile (14) angeordnet ist.

14. Apparat nach den Ansprüchen 12 und 13, **dadurch gekennzeichnet, dass** der zweite robotisierte Manipulator am Austritt (39) zwischen der Montagestation (50) und der Abführstation (53) angeordnet ist und dafür ausgelegt ist, um zumindest den Deckel (14) von der Abführstation (53) zur Montagestation (50) zu überführen.

15. Apparat nach einem der vorhergehenden Ansprüche, **dadurch gekennzeichnet, dass** er eine Füllstation (51) umfasst, die stromab der ersten Waschmaschine (19) und der zweiten Waschmaschine (24) angeordnet ist und dafür ausgelegt ist, um das Tablett (12) mit einem Füllmaterial zu füllen, das dazu geeignet ist, um eine Streu zu definieren.

16. Apparat nach einem der vorhergehenden Ansprüche, **dadurch gekennzeichnet, dass** die ersten Betriebseinheiten (22) entlang einer ersten Betriebsachse (X) ausgerichtet angeordnet sind und die zweiten Betriebseinheiten (27) entlang einer zweiten Betriebsachse (Y), die zur ersten Betriebsachse (X) parallel ist, ausgerichtet angeordnet sind.

17. Apparat nach einem der vorhergehenden Ansprüche, **dadurch gekennzeichnet, dass** die Empfangsstation (44) eine drehende Plattform (45) umfasst, die dafür ausgelegt ist, um sich selbst um eine vertikale Drehachse zu drehen.

18. Apparat nach Anspruch 17 in Kombination mit einem der Ansprüche 5 bis 10, **dadurch gekennzeichnet, dass** die drehende Plattform (45) imstande ist, den Stützkörper (26) aufzunehmen und zu drehen.

19. Verfahren zur Behandlung von Behältervorrichtungen (11) für Tiere, die jeweils eine Vielzahl von Bestandteilen (12, 13, 14), einschließlich eines Tablettes (12), eines Troges (13) und eines Deckels (14), umfassen, die in einem montierten Zustand wechselseitig verbunden werden können, **dadurch gekennzeichnet, dass** es umfasst:
- Zuführen der Behältervorrichtungen (11) in einem montierten Zustand, in dem der Deckel (14) vom verbundenen Tablett (12) und vom Trog (13) ausgelöst ist, bei einer Empfangsstation (44);
- Trennen der Behältervorrichtungen (11) zumindest in das jeweilige Tablett (12), in den jeweiligen Trog (13) und den Deckel (14) mittels eines ersten robotisierten Manipulators am Eintritt (38);
- Zuführen des Tablettes (12) und des Troges (13) zu einer ersten Waschmaschine (19), und Waschen des Tablettes (12) und des Troges (13) in der ersten Waschmaschine (19);
- Zuführen des Deckels (14) zu einer zweiten Waschmaschine (24), und Waschen, in der zweiten Waschmaschine (24), des Deckels (14) parallel zum Waschen des Tablettes (12) und des Troges (13) in der ersten Waschmaschine (19), und
- ein anschließendes Montage des Tablettes (12) und des Troges (13), die aus der ersten Waschmaschine (19) austreten, und des Deckels (14), der aus der zweiten Waschmaschine (24) austritt, nachdem sie behandelt worden sind, mittels eines zweiten robotisierten Manipulators am Austritt (39).

20. Verfahren nach Anspruch 19, **dadurch gekennzeichnet, dass** die zu behandelnden Behältervorrichtungen (11) auf einem Stützkörper (26) zugeführt und anschließend vom Stützkörper (26) zur Trennung der Bestandteile (12, 13, 14) entfernt werden.

21. Verfahren nach Anspruch 20, **dadurch gekennzeichnet, dass** nach der Trennung aus der Behältervorrichtung (11) der Deckel (14) auf dem Stützkörper (26) positioniert wird, **und dass** während der zweiten Waschung der Deckel (14) in die zweite Waschmaschine (24) auf dem Stützkörper (26) überführt wird.

22. Verfahren nach Anspruch 21, **dadurch gekennzeichnet, dass** nach der zweiten Waschung der Deckel (14) vom Stützkörper (26) entfernt und mit dem Tablett (12) und dem Trog (13) montiert wird, um eine der Behältervorrichtungen (11) zu definieren, **und dass** nach der Montage die Behältervorrichtungen (11) auf den Stützkörper (26) positioniert werden.

## Revendications

1. Appareil pour traiter des dispositifs (11) contenant des animaux, chacun desquels dispositifs (11) comprenant une pluralité de composants (12, 13, 14) incluant un plateau (12), une auge (13) et un couvercle (14), qui peuvent être mutuellement reliés dans une condition d'assemblage, ledit appareil comprenant au moins :
- un poste de réception (44) pour les dispositifs (11) formant contenant à traiter, dans une condition d'assemblage dans laquelle le couvercle (14) est libéré par rapport au plateau (12) et à l'auge (13) combinés,
- une station de lavage (18) apte à recevoir les dispositifs (11) formant contenant provenant de la station de réception (44) et configurée pour laver lesdits composants (12, 13, 14), **caractérisée en ce que**
ladite station de lavage (18) comprend :
une première machine de lavage (19) configurée pour laver au moins ledit plateau (12) et ladite auge (13) et comprenant une ou plusieurs premières unités d'actionnement (22),
une deuxième machine de lavage (24) configurée pour laver en parallèle ledit couvercle (14) et comprenant une ou plusieurs deuxièmes unités d'actionnement (27),
et **en ce que** ledit appareil comprend également :
- un premier manipulateur robotisé situé à l'entrée (38), configuré pour saisir les composants (12, 13, 14) de chaque dispositif (11) formant contenant et les séparer les uns des autres dans la station de réception (44) et pour amener ledit plateau (12) et ladite auge (13) vers la première machine de lavage (19) et ledit couvercle (14) vers la deuxième machine de lavage (24), et
- un deuxième manipulateur robotisé situé à la sortie (39), configuré pour saisir ledit plateau (12) et ladite auge (13) sortant de la première machine de lavage (19) et ledit couvercle (14) sortant de la deuxième machine de lavage (24) après ils aient été traités, et pour les assembler les uns par rapport aux autres.

2. Appareil selon la revendication 1, **caractérisé en ce qu'**il comporte une station de séparation (40) positionnée en amont de la première machine de lavage (19) et de la deuxième machine de lavage (24) et configurée au moins pour supporter au moins un dispositif (11) formant contenant pendant la séparation des composants (12, 13, 14).

3. Appareil selon la revendication 2, **caractérisé en ce que** ladite station de séparation (40) est interposée entre ladite station de réception (44) et ladite première machine de lavage (19).

4. Appareil selon la revendication 2 ou la revendication 3, **caractérisé en ce que** ledit premier manipulateur robotisé situé à l'entrée (38) est placé dans une position intermédiaire entre la station de réception (44) et la station de séparation (40), et est configuré pour saisir lesdits dispositifs (11) formant contenant provenant de ladite station de réception (44) et pour les transférer dans ladite station de séparation (40).

5. Appareil selon l'une quelconque des revendications précédentes, **caractérisé en ce qu'**il comprend au moins un corps de support (26) prévu pour supporter une pluralité desdits dispositifs (11) formant contenant à traiter.

6. Appareil selon la revendication 5, **caractérisé en ce que** ledit au moins un corps de support (26) est du type multiplan, muni d'une pluralité de plans de support (33) aptes à supporter de manière stable les dispositifs (11) formant contenant fournis à la station de réception. (44) et les couvercles (14) à traiter fournis à la deuxième machine de lavage (24).

7. Appareil selon la revendication 6, **caractérisé en ce que** lesdits plans de support (33) peuvent être inclinés.

8. Appareil selon la revendication 5, 6 ou 7, **caractérisé en ce que** ledit corps de support comprend un coulisseau de support (26).

9. Appareil selon l'une quelconque des revendications 5 à 8, **caractérisé en ce que** ladite station de réception (44) est configurée pour recevoir ledit au moins un corps de support (26).

10. Appareil selon la revendication 9, **caractérisé en ce que** ladite station de réception (44) est située à proximité d'une extrémité d'entrée (28) vers la deuxième machine de lavage (24) et est configurée pour transférer ledit corps de support (26) à l'entrée vers ladite deuxième machine de lavage (24).

11. Appareil selon l'une quelconque des revendications précédentes, **caractérisé en ce qu'**il comprend une station de vidage (47) configurée pour vider et recueillir le contenu dudit plateau (12) et de ladite auge (13) desdits dispositifs (11) formant contenant, et en ce ledit premier manipulateur robotisé situé à l'entrée (38) est configuré pour transférer ledit plateau (12) et ladite auge (13) depuis ladite station de vidage (47) vers ladite première machine de lavage (19).

12. Appareil selon l'une quelconque des revendications précédentes, **caractérisé en ce qu'**il comprend une station d'assemblage (50) située en aval de ladite première machine de lavage (19) et de ladite deuxième machine de lavage (24) et configurée au moins pour supporter ledit plateau (12) pendant les opérations d'assemblage avec ladite auge (13) et ledit couvercle (14), et **en ce que** ledit deuxième manipulateur robotisé situé à la sortie (39) est configuré pour transférer ledit plateau (12) et ladite auge (13) depuis ladite première rondelle la machine (19), et respectivement ledit couvercle (14) depuis ladite deuxième machine de lavage (24), à ladite station d'assemblage (50).

13. Appareil selon l'une quelconque des revendications précédentes, **caractérisé en ce qu'**il comprend une station d'évacuation (53) configurée pour loger au moins un corps de support (26) provenant de ladite deuxième machine de lavage (24) et sur lequel au moins l'un desdits composants (14) est disposé.

14. Appareil selon les revendications 12 et 13, **caractérisé en ce que** ledit deuxième manipulateur robotisé situé à la sortie (39) est disposé entre ladite station d'assemblage (50) et ladite station d'évacuation (53) et est configuré pour transférer au moins ledit couvercle (14) depuis ladite station d'évacuation (53) vers ladite station d'assemblage (50).

15. Appareil selon l'une quelconque des revendications précédentes, **caractérisé en ce qu'**il comprend une station de remplissage (51) située en aval de ladite première machine de lavage (19) et de ladite deuxième machine de lavage (24) et configurée pour remplir ladite auge (12) par un matériau de remplissage, approprié pour définir une litière.

16. Appareil selon l'une quelconque des revendications précédentes, **caractérisé en ce que** lesdites premières unités d'actionnement (22) sont alignées le long d'un premier axe d'actionnement (X) et lesdites deuxièmes unités d'actionnement (27) sont disposées de façon alignée le long d'un deuxième axe d'actionnement (Y) parallèle audit premier axe de fonctionnement (X).

17. Appareil selon l'une quelconque des revendications précédentes, **caractérisé en ce que** ladite station de réception (44) comprend une plate-forme tournante (45) configurée pour tourner sur elle-même autour d'un axe de rotation vertical.

18. Appareil selon la revendication 17 combinée avec l'une quelconque des revendications 5 à 10, **caractérisé en ce que** ladite plate-forme rotative (45) est apte à recevoir et à faire tourner ledit corps de support (26).

19. Procédé de traitement de dispositifs (11) contenant des animaux, comprenant chacun une pluralité de composants (12, 13, 14), incluant un plateau (12), une auge (13) et un couvercle (14), aptes à être mutuellement reliés dans une condition d'assemblage, **caractérisé en ce qu'**il comprend :
- le fait de fournir, au niveau d'une station de réception (44), lesdits dispositifs (11) formant contenant dans une condition assemblée dans laquelle le couvercle (14) est libéré par rapport au plateau (12) et à l'auge (13) combinés ;
- le fait de séparer lesdits dispositifs (11) formant contenant au moins en ledit plateau (12), ladite auge (13) et ledit couvercle (14) respectifs au moyen d'un premier manipulateur robotisé situé à l'entrée (38) ;
- le fait d'amener ledit plateau (12) et ladite auge (13) vers une première machine de lavage (19), et de laver ledit plateau (12) et ladite auge (13) dans ladite première machine de lavage (19) ;
- le fait d'amener ledit couvercle (14) vers une deuxième machine de lavage (24) et de laver, dans ladite deuxième machine de lavage (24), ledit couvercle (14) en parallèle au lavage dudit plateau (12) et de ladite auge (13) dans la première machine de lavage (19), et
- le fait de réaliser un assemblage ultérieur dudit plateau (12) et de ladite auge (13) sortant de la première machine de lavage (19) et dudit couvercle (14) sortant de la deuxième machine de lavage (24), après qu'ils aient été traités, au moyen d'un deuxième manipulateur robotisé situé à la sortie (39).

20. Procédé selon la revendication 19, **caractérisé en ce que** lesdits dispositifs (11) formant contenant à traiter sont amenés sur un corps de support (26) et ensuite retirés dudit corps de support (26) pour la séparation des composants (12, 13, 14).

21. Procédé selon la revendication 20, **caractérisé en ce que**, après séparation par rapport audit dispositif (11) formant contenant, ledit couvercle (14) est positionné sur ledit corps de support (26), et **en ce que**, pendant ledit deuxième lavage, ledit couvercle (14) est transféré dans ladite deuxième machine de lavage (24) sur ledit corps de support (26).

22. Procédé selon la revendication 21, **caractérisé en ce qu'**après ledit deuxième lavage, ledit couvercle (14) est retiré dudit corps de support (26) et est assemblé au plateau (12) et à l'auge (13) pour définir l'un desdits dispositifs (11) formant contenant, et **en ce qu'**après assemblage, lesdits dispositifs (11) formant contenant sont positionnés sur ledit corps de support (26).
